# EUROPEAN PATENT SPECIFICATION

(11) **EP 1 710 639 B1**
(45) Date of publication and mention of the grant of the patent: **29.04.2009**
(21) Application number: 06005408.7
(22) Date of filing: 16.03.2006
(51) Int. Cl.: G05B 19/042

(54) **Industrial automation interface systems and methods**
Benutzerschnittstellensysteme und -verfahren für industrielle Automatisierung
Systèmes et procédés d'interface d'automatisation industrielle

(30) Priority: 01.04.2005 US 96441
(43) Date of publication of application: 11.10.2006
(73) Proprietor: Rockwell Automation Technologies, Inc., Mayfield Heights, OH 44124 (US)
(72) Inventor: Callaghan, David M., Concord OH 44077 (US)
(74) Representative: Grünecker, Kinkeldey, Stockmair & Schwanhäusser Anwaltssozietät

(56) References cited:
- EP-A- 1 280 027
- EP-A- 1 327 938
- WO-A-01/63431
- WO-A-01/69329
- US-A1- 2003 198 188
- US-A1- 2004 158 474

## Description

### TECHNICAL FIELD

The subject invention relates generally to industrial automation systems and more particularly toward interfaces and applications associated therewith.

### BACKGROUND

Human machine interfaces (HMIs) or simply user interfaces are important to the successful operation and maintenance of industrial automation devices and equipment. User interfaces provide the essential communication link between operators and automation devices. This link allows operators to, among other things, setup devices, monitor device status during operation, as well as analyze device health. Without such user interfaces, high-level industrial automation would be difficult if not impossible to achieve.

Over the years, user interfaces have gone through several changes. At first, user interfaces were simply dumb terminals, which merely displayed text messages to end-users indicative of some process performed by a server or processor associated with an automated device. For instance, a failed device would generate an internal error code representing a determined error, which could then be matched to a particular error message and displayed to a user or operator on a display device. Over time, client side processing developed to enable a move from a text based interface to a graphical user interface (GUI). This transition shifted some of the processing burden away from the automated device or associated processor toward the client side GUI. These new GUIs vastly improved the ability of users to access information quickly and easily.

Unfortunately, these GUIs were not portable in part because of their size and machine dependencies and therefore were not a viable option for managing and controlling a plurality of devices connected together in a network. Shortly thereafter, the processing burden shifted back toward devices and away from interfaces with the advent the Internet and web browsers. As a result, developers sought to use web browsers as an interface mechanism. However, browsers employ a mark up language that is useful for displaying text and static images over a network, as was the purpose of browsers when they were originally conceived, but not for dynamic user interfaces. Accordingly, there is a need in the art for interfaces that provides users with a rich interactive experience that allows users to quickly and easily access and transfer information to and from automation devices in real-time.

EP 1 327 938 A relates to a remote control server and a center server for monitoring/controlling a target device under a network environment. A server program comprises an OP server for managing a VM class file, which is an operating program for providing information to an information terminal on the client or center side, and an HTTP server for distributing the VM class of the monitored/controlled target device on the client or center side. A VM class file is software for operating the monitored/controlled target device, and a VM interface class file is interface software for establishing a connection to the monitored/controlled target device in combination with the VM class file. The HTTP server for providing VM to the client or the center is a WWW server. When the client or the center accesses the server using a web browser, the HTTP server distributes the VM class to the client or the center in accordance with the VM class number designated by the client or the center.

EP 1 264 221 A relates to control for an industrial process using one or more multidimensional variables. An input module includes a software interface which couples information from a conventional processing plant to a plurality of processes for operations and analysis. The software interface may take the form of several standards including open database connectivity or dynamic data exchange standards. The software interface in turn couples with a server, rendering both inputs and outputs of the process control system accessible via web based communication. Specifically, data from the process may be acquired over the internet, and outputs from the system may be assessed by a user over the internet utilizing process software

US 2003/198188 A1 relates to distributed communication systems and to such systems used to monitors, remote, distributed equipment or production systems. End user display clients reside on end user computers and provide display services to the end user. Preferably, the end user display client is a Macromedia Flash executable which has been customized for each customer, but is common across all end user computers for the same customer. The executable can be downloaded to any computer by an authorized computer, allowing user interaction on any compatible computer which is attached to the WAN. XML objects embedded within the executable then handle the retrieval of data from an end user database and the display of that data to the end user. A web server receives data and stores it in the end user database. This database accumulates data until it is used by the end users or purged as desired. When an end user desires to view the accumulated data, the display client is activated and the user logged in through a validation and authentication process.

EP 1 280 027 A relates to a control server and a control terminal for use in a control system having a programmable display apparatus for checking/controlling display contents of the programmable display apparatus from a remote location without creating a new display use screen.

### SUMMARY

It is the object of the present invention to improve prior art systems.

This object is solved by the subject matter of the independent claims.

Preferred embodiments are defined in the dependent claims.

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

Briefly described, the subject invention concerns systems and methods of interacting with automation devices comprising an industrial control system. In particular, a browser can be utilized to facilitate retrieval and presentation of data to and from users. The browser can interact with automation devices such as controllers by employing applications components such as applets or plug-ins. According to one aspect of the invention, these application components can interact with automation devices in their native control protocols providing added performance benefits, among other things. Accordingly, data can be requested, received, and presented by the browser in substantially real-time. Furthermore, the browser in conjunction with one or more application components can receive and execute commands or instructions from one or more automation devices. Still further yet, with the advent of the XAML markup and programming language, the application and markup language are no longer constrained to operate solely within the web browser. The benefits of both the markup language and the pluggable applet are meshed and execute on the client computer with or without the web browser, and support any language that supports the .NET Common Language Specification (CLS).

In accordance with an aspect of the subject invention, a computer application can also be generated that utilizes one or more browser components. For example, a conventional client application can generate an interface that includes a number of browser components for presenting and interacting with data.

In accordance with another aspect of the subject invention, a computer application can be generated that visualizes XML messages from the automation layer in novel ways. The new operating system enhancements such as Microsoft "Avalon" with built in XML rendering capabilities can exchange XAML information with the automation device to provide visualization into the control process.

In accordance with an aspect of the invention, application components can be retrieved and executed from a local storage medium. For example, one or more application components can be retrieved from a disk or other portable computer readable mediums including but not limited to memory sticks and key drives. Additionally, one or more application components can be downloaded over a network such as the Internet, for example utilizing streaming technology or *via* email attachment. After being received, the application components can be stored to a local computer data store or associated computer readable medium not limited to a hard or disk drive. Storing and accessing applications locally in this manner can provide expeditious loading and execution of application components, among other things.

In accordance with another aspect of the invention, digital rights management technologies or techniques can be applied to the application components to improve security. In particular, constraints can be associated with application components including but not limited to a constraint on the computer(s) the application component can be executed on, the controller(s) that can be accessed by the application component, the number of times the application component can be copied, if at all, and the users that can initiate execution of the application components. Hence, execution can be controlled and conditioned on the satisfaction of all constraints associated with an application component. According to an aspect of the invention, digital rights management functionality can be provided by another application component, for example.

To the accomplishment of the foregoing and related ends, certain illustrative aspects of the invention are described herein in connection with the following description and the annexed drawings. These aspects are indicative of various ways in which the invention may be practiced, all of which are intended to be covered by the present invention. Other advantages and novel features of the invention may become apparent from the following detailed description of the invention when considered in conjunction with the drawings.

### BRIEF DESCRIPTION OF THE DRAWINGS

Fig. 1 is a block diagram of an industrial control interface system in accordance with an aspect of the subject invention.

Fig. 2 is a block diagram of an interface system in accordance with an aspect of the subject invention.

Fig. 3 is a block diagram of an exemplary graphical user interface in accordance with an aspect of the subject invention.

Fig. 4a is an exemplary graphical user interface in accordance with an aspect of the subject invention.

Fig. 4b is an exemplary graphical user interface in accordance with an aspect of the subject invention.

Fig. 5 is a block diagram of an application storage system in accordance with an aspect of the subject invention.

Fig. 6 is a block diagram of an application retrieval system in accordance with an aspect of the subject invention.

Fig. 7 is a block diagram of an industrial control interface system in accordance with an aspect of the subject invention.

Fig. 8 is a block diagram of an application component in accordance with the subject invention.

Fig. 9 is a flow chart diagram of an interface methodology in accordance with an aspect of the subject invention.

Fig. 10 is a flow chart diagram of a storage methodology in accordance with an aspect of the subject invention.

Fig. 11 is a flow chart diagram of a digital rights management methodology in accordance with an aspect of the subject invention.

Fig. 12 is a flow chart diagram of a method of interacting with an industrial automation system in accordance with an aspect of the subject invention.

Fig. 13 is a schematic block diagram illustrating a suitable operating environment in accordance with an aspect of the present invention.

Fig. 14 is a schematic block diagram of a sample-computing environment with which the present invention can interact.

### DETAILED DESCRIPTION

The present invention is now described with reference to the annexed drawings, wherein like numerals refer to like or corresponding elements throughout. It should be understood, however, that the drawings and detailed description thereto are not intended to limit the invention to the particular form disclosed. Rather, the intention is to cover all modifications, equivalents, and alternatives falling within the scope of the present invention.

As used in this application, the term "component" and the like are intended to refer to a computer-related entity, either hardware, a combination of hardware and software, software, or software in execution. For example, a component may be, but is not limited to being, a process running on a processor, a processor, an object, an instance, an executable, a thread of execution, a program, and/or a computer. By way of illustration, both an application running on a computer and the computer can be a component. One or more components may reside within a process and/or thread of execution and a component may be localized on one computer and/or distributed between two or more computers.

The word "exemplary" is used herein to mean serving as an example, instance, or illustration. Any aspect or design described herein as "exemplary" is not necessarily to be construed as preferred or advantageous over other aspects or designs.

Furthermore, the present invention may be implemented as a method, system, apparatus, or article of manufacture using standard programming and/or engineering techniques to produce software, firmware, hardware, or any combination thereof to control a computer to implement the disclosed invention. The term "article of manufacture" as used herein is intended to encompass a computer program accessible from any computer-readable device, carrier, or media. For example, computer readable media can include but is not limited to magnetic storage devices (*e.g*., hard disk, floppy disk, magnetic strips...), optical disks (*e.g*., compact disk (CD), digital versatile disk (DVD)...), smart cards, and flash memory devices (*e.g*., card, stick). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope of the subject invention.

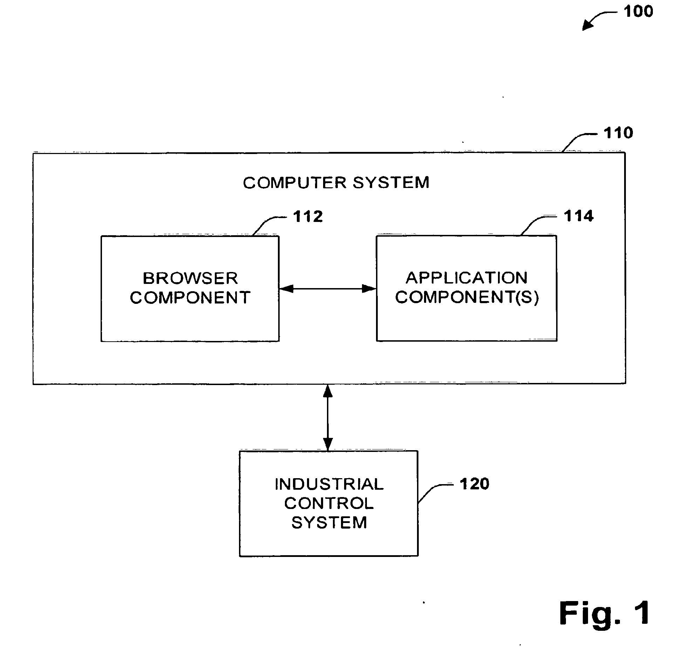

Referring initially to Fig. 1, an industrial control interface system 100 is depicted in accordance with an aspect of the subject invention. Control interface system 110 can provide and retrieve information to and from users regarding industrial control devices in a control system in a simple and interactive manner. Hence, interface system 100 can facilitate monitoring, diagnosing and predicting problems, and issuing commands and/or corrective action, among other things, in an industrial control system and sub-components or devices thereof. Interface system 100 can include a computer system 110 including a browser component 112 and one or more application components 114, and an industrial control system 120.

Computer system 110 can be any computer device or system as broadly defined in subsequent sections. In brief, a computer can include one or more processors as well as system memory to facilitate execution of instructions transforming a general-purpose computer into a specialized machine. System software applications can act as an intermediary between users and computer resources. Such software includes an operating system (OS) and presentation subsystem. An operating system, which can be stored on disk storage, acts to control and allocate resources of the computer system. A presentation subsystem provides a graphical interface to the computer. Application or end-user software can take advantage of the management of resources by the operating system through program modules and program data stored either in system memory or on disk storage, for example. Application software provides functionality for specific tasks or problems. In accordance with an aspect of the invention, computer system 110 can correspond to a general-purpose computer or workstation running commercial or proprietary software for use by one or more users as opposed to a large-scale mainframe. Hence, computer system 110 can be client personal computer (PC). However, the invention is not so limited. For example, the computer system 110 can be a client PC including software that allows it to act as a web server (*e.g*. File Transfer Protocol (FTP) server...). Additionally or alternatively, computer system 110 can be a thin client, operating off a centrally managed operating system or centrally managed applications. Further, computer system 110 can be a terminal session or remote graphical interface of an instance of a client operating system that is running on a partition of another computing device (not shown). This computing device may be a server for example with multiple operating systems installed, and effect resource allocation policies to limit the computational, memory, storage, network bandwidth, etc of the individual operating system partitions.

Computer system 110 can include a browser component 112 and an application component(s) 114. Browser component 112 is an easy to use interface that enables users to view and interact with data including but not limited to one or more of text, graphics, sound and video. The browser component 112 can also facilitate connection to the Internet or other network. Accordingly, the browser component 112 can be or correspond to a web browser including but not limited to one of Internet Explorer, Netscape Navigator, Firefox, Opera and Mosaic. Browser component 112 provides a programmatic environment that presents users with web pages. These pages are graphical representation of underlying code for instance programmed in HTML (Hyper Text Markup Language). Browser component 112 can natively support execution and presentation of HTML and image formats such as Scalable Vector Graphics (SVG), JPEG and GIF. For example, a web page can include an image and text pertaining to that image. Furthermore, browser component 112 can support scripting languages. Scripting languages including but not limited to JavaScript and Jscript can be utilized to produce dynamic web pages. Scripting languages can be supported by an interface called DOMs (Document Object Models) provided by the browser component 112. Scripting languages can be utilized to develop functions that are embedded in the page HTML and interact with the DOM interface of browser component 112 to provide dynamic functionality not possible with static HTML. For example, images could change as a curser rolls over them. Additionally, the browser component 112 can support a style sheet language such as CSS (Cascading Style Sheets) to facilitate presentation of structure documents including but not limited to XML (extensible Markup Language). HTML that includes one or more of a scripting functions and style sheets is referred to as DHTML (Dynamic HTML).

Additionally, it should be appreciated that the browser component 112 may execute java applets, java beans and java applications. Also, application component 114 may implement a java container and allow execution of the desired java beans (reusable application components) in the container, or a web container and allow execution of java servlets.

Applications component(s) 114 can include hardware and/or software programs that provide a particular functionality or set of functionalities. According to an aspect of the subject invention, application component(s) 114 can be hosted or executed by or in conjunction with a browser component 112. The application component(s) 114 can therefore allow browser component 112 to be directly interactive *via* incorporation of graphics, sound, and video, *inter alia.* Hence, application components 114 can include but are not limited to plug-ins, applets, java beans, java script extensions, XAML applications, and Active X controls. For example, a browser component 112 can fetch an applet identified in a HTML (Hyper Text Markup Language) browser page and subsequently execute the applet utilizing an engine or interpreter attached or associated with the browser component 112. It should be appreciated that application components 114 are different from scripts. In particular, scripts are text based, written in to an HTML or DHMTL document, and run within the browser component environment. Applications components 114 such as applets are compiled into an intermediate format (*e.g*., byte code) and although they also run within a browser *via* an execution engine or interpreter, the applets are executed independent of the HTML. These applets may launch to assist the user with processing or using the interface, such as text to speech assistance, voice recognition, and helpful interfaces powered by applets and Active-X controls as an example.

Although application components 114 can be hosted or executed in or by a browser component 112, the subject invention is not so limited. Application components 114 can also correspond to slightly more traditional user application software that executes on a client computer, for instance employing the services of the OS and other applications or engines. Further, these application components 114 may include XAML applications, which are applications coded in the Extensible Application Markup Language (XAML). These XAML applications are XML markup language including presentation and code and leverage a presentation subsystem, which currently carries the Microsoft codename "Avalon." In addition, it should be pointed out that the applications described by component 114 can include a web server, Java servlet container, J2EE Java Bean container, as well as applications and services such as remote application management frameworks like Open System Gateway Initiative (OSGi), and SyncML applications. Such application components 114 are also referred to as OS applications or OS application components herein.

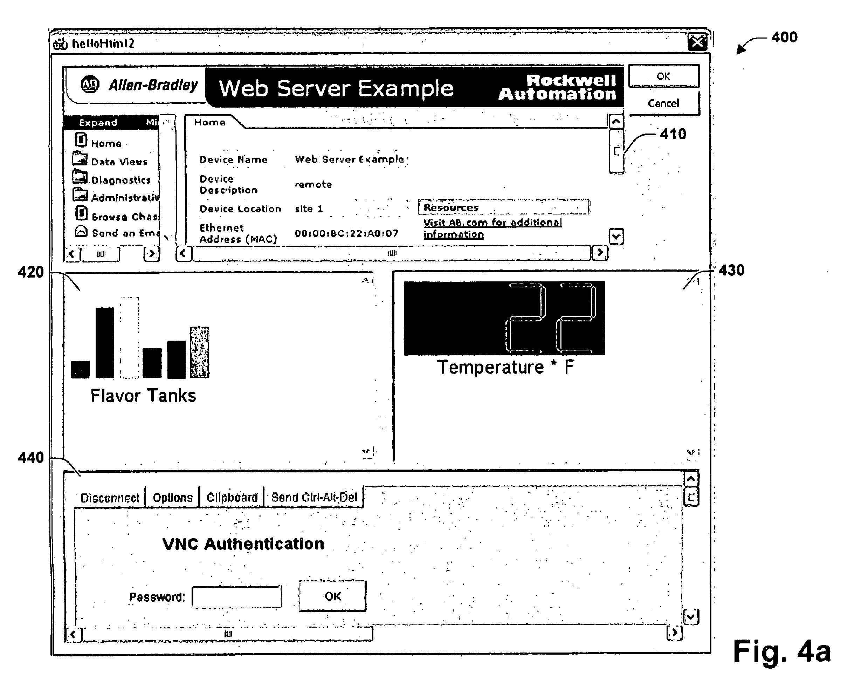

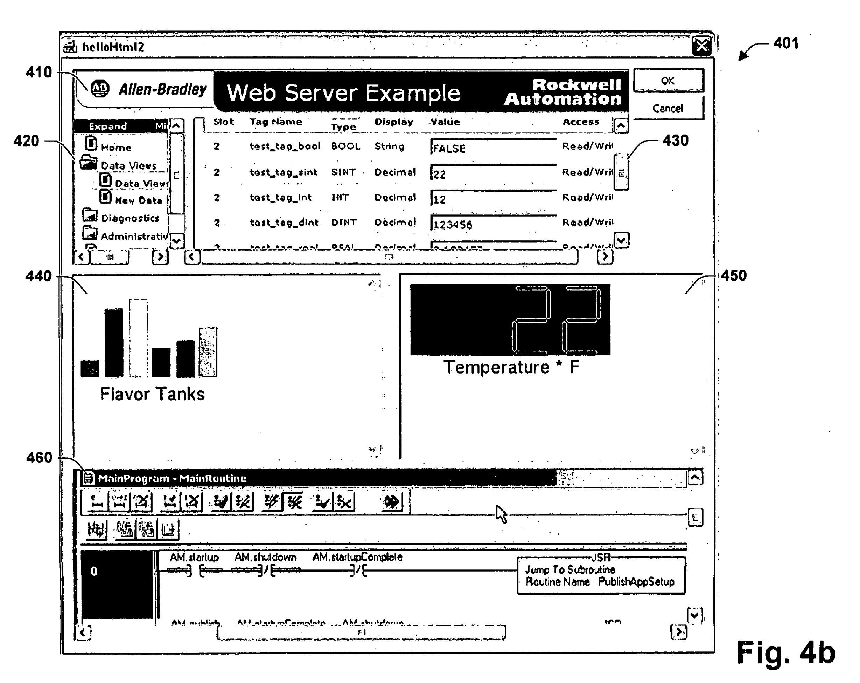

In accordance with an aspect of the invention, interaction between a browser component 112 and an application component 114 can go beyond the browser employing application component services. More specifically, the browser component 112 can be incorporated into an application component 114 and function on one or many display panels and interfaces of the application (See Figs. 4a and 4b), for instance.

In accordance with an aspect of the invention, application component(s) 114 can be located or stored on a computer readable medium within or closely linked to computer system 112, for example on hard drive disk storage. Thus, it should be appreciated that application component(s) 114, although they could be, the application component(s) 114 need not be downloaded from a web server or site. They can be physically loaded to the computer system 112 *via* a mobile/removable computer readable medium (*e.g*., disk, CD, memory stick, key drive, flash drive...). Such application component(s) 114 can retrieve and interact with data on a local data store. Nevertheless, application component(s) 114 can interact (*e.g*., receive, transmit...) with data and devices remotely over a network including but not limited to the Internet and/or a local area network.

Furthermore, the subject invention supports additional means and mechanisms for receiving application component(s) 114 and/or data. For instance, application component(s) 114 can be received from a server (*e.g*., web server). Additionally or alternatively, a client can leverage on-demand system streaming solutions that deliver operating systems, applications, and/or configurations, *inter alia,* to a computer by streaming the actual software in a fashion similar to video streaming. This provides central management because the OS, application and configuration images are maintained centrally, yet provides terrific performance for the end user because all the OS and applications execute on the computer device locally.

Industrial control system 120 includes one or more devices to control and or automate an industrial process. Automation devices can include any one of a plurality of industrial processes and machines including but not limited to programmable logic controllers (PLCs), pumps providing fluid transport and other processes, fans, conveyor systems, compressors, gearboxes, motion control and detection devices, sensors, screw pumps, and mixers, as well as hydraulic and pneumatic machines driven by motors. Such motors can be combined with other components, such as valves, pumps, furnaces, heaters, chillers, conveyor rollers, fans, compressors, gearboxes, and the like, as well as with appropriate motor drives to form industrial machines and actuators. For example, an electric motor could be combined with a motor drive providing variable electrical power to the motor, as well as with a pump, whereby the motor rotates the pump shaft to create a controllable pumping system.

Computer system 110 interacts with an industrial control system 120 and/or one of the devices comprising the system 120. More particularly, the browser component 112 together with one or more application components 114 can be employed to interact with the control system 120. For example, an application component 114 can implement a control system protocol, and through such protocol monitor automation devices and provide real-time data regarding the status of one or more devices back to a user through the browser component 112. The browser component 112 can display such information (*e.g*., pages) to users in an easily comprehensible and possibly interactive manner, for example utilizing text, graphics, charts, virtual buttons and gauges, virtual control surfaces like levers and knobs, and the like. Furthermore, users can employ the browser and application components 112 and 114 to issue commands or instructions to one or more automation devices. For instance, a user could alter the speed of one or more conveyor motors *via* interaction with the browser. More specifically, the input received from a user by way of the browser component 112 could be employed by an embedded application component 114 to issue specific commands to the motors utilizing the appropriate protocol. This is advantageous at least because automation devices can be monitored and/or controlled utilizing their native protocols rather than some Internet protocols such as HTTP (HyperText Transfer Protocol). Accordingly, control and/or monitoring of a control system 120 and its devices are more efficient and utilize less bandwidth. Of course, the invention is not limited to implementation of native protocols as application components 114 can employ HTTP based web services, for instance. Further the automation device may contain text web pages which provide URL or URI, HTML tags and hypertext links to computing devices, including both automation and non-automation related, such as web servers, file servers, intranet and internet sites from which the applications, plug-ins and applets may be downloaded, installed and run on component 110.

Additionally, it should be noted that application component(s) 114 is not restricted to interacting with automation devices. Application component(s) 114 can also retrieve data from a local computer data store or other associated computer readable medium. For example, product manuals can be downloaded to a computers hard drive or made available by way of some removable computer readable medium.

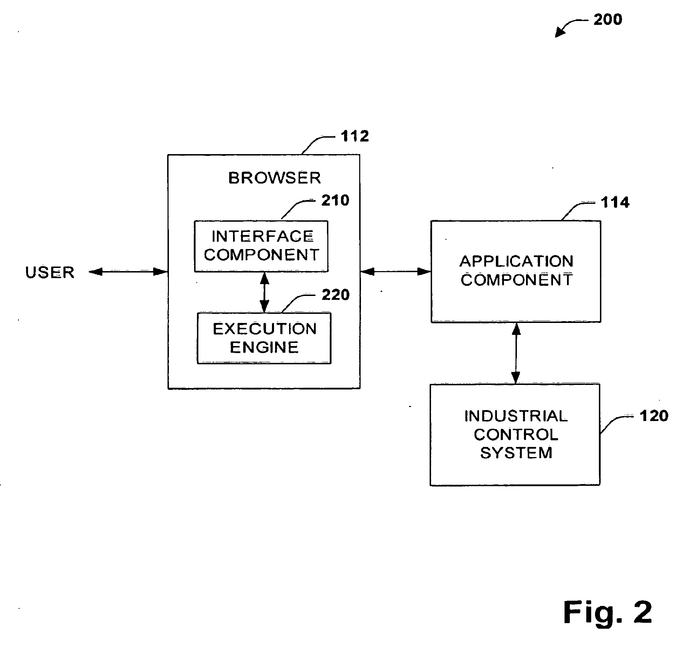

Fig. 2 illustrates an interface system 200 in accordance with an aspect of the subject invention. System 200 includes a browser component 112 including an interface component 210 and an execution engine 220, an application component(s) 114 and industrial control system 120. As previously described, application component 114 can include executable programs (*e.g*., hardware, software, combination) providing specific functionality. In particular, the application component(s) 114 can provide functionality regarding monitoring and/or control of an industrial control system 120 and/or one or more automation devices comprising the system 120. Browser component 112 can host the application component thereby enabling users to interact with the industrial control system 120 or one of its devices. More specifically, browser component 112 can include an execution engine 220 that executes the application component 114. It should be appreciated that in accordance with an aspect of the invention execution engine 220 can retrieve, load and/or execute application component 114 from a local computer readable medium such as local computer disk storage. The browser component 114 can also include an interface component 210 to interact, for instance graphically, with users to retrieve and provide information from a running application component 114. Further, component 114 may be an application that does not require the browser, and provides a user interface that enables a user to interact with the automation devices comprising the system 120.

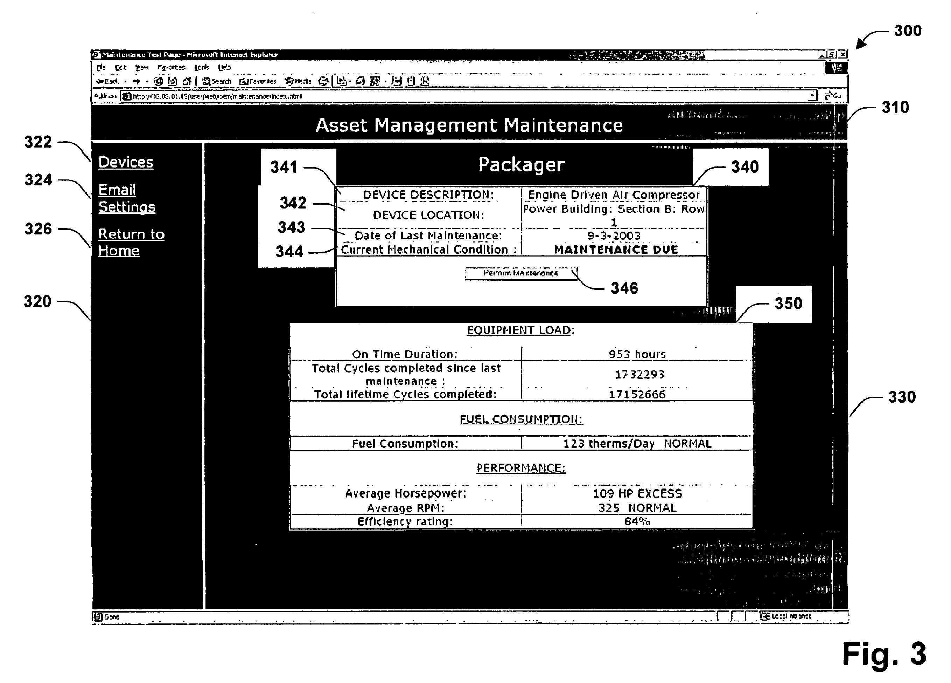

Turning to Fig. 3, an exemplary graphical user interface 300 is illustrated in accordance with an aspect of the invention. Exemplary interface 300 is an asset, management, maintenance interface. As is illustrated, the interface is divided into three frames or sections 310, 320, and 330. Frame 310 simply provides a section to display the title of the interface, namely "Asset Management Maintenance." Frame 320 provides links 322, 324, and 326 to other web pages and functionality possibly for display in frame 330. Link 322 corresponds to a devices link, which can be activated such that a list or map of system devices can be displayed in frame 330 or on a new page for selection by a user. Link 324 provides a link to set up email such that a user will have easy access to email to notify others of information displayed in the interface or even copy screen shots. Return home link 326 provides an option to return to a homepage as the currently displayed page is at least one level deep in a hierarchy of interface pages. Other links not shown could include Really Simple Syndication (RSS) feeds providing remote users the ability to find information such as new alarm events *etc.* Frame 330 displays the main page selected, which corresponds here to a packager device. Frame 330 comprises two blocks 340 and 350 separating distinct portions of information about the packager device. Block 340 includes device description 341, device location 342, date of last maintenance 343 and current mechanical condition 344. As shown here, device description and device location simply display respective updatable data next to statically displayed text. However, the displayed text could also be links such that upon selection of a link the user is transported to another page of the interface that contains, for instance, more detailed information about the device and/or a map illustrating the actual location of the device relative to other devices. Also shown here in block 340 is the current mechanical condition of the packager device, which can be determined and/or provided by an application component 114 (Figs. 1-2) and displayed in real-time. Perform maintenance button 346 provides the user the option and a mechanism to initiate a maintenance process or program by simply clicking the button conveniently located below the listed mechanical condition -here "Maintenance Due." Block 350 comprises three tables illustrating data with respect to equipment load, fuel consumption and performance. This block 350 can be specified such that the application component 114 or program responsible for providing data for such display links, binds, or calculates the displayed data in real-time. For example, during the time in which a user is perusing the display the data corresponding to the total lifetime cycles completed can be constantly updated as the device completes cycles. Accordingly, the user will always have the most current data available rather than merely a snapshot of the data at a particular time (*e.g*., when the browser is first opened by a user).

As described *supra,* application component(s) 114 such as OS applications can also employ browser components 112 to produce graphical user interfaces. Such browser components 112 can also incorporate applications components 114 to facilitate user and system interaction.

Turning to Fig. 4a, an exemplary graphical user interface 400 is depicted in accordance with an aspect of the subject invention. Interface 400 is a graphical user interface generated by an OS application component 114 (Fig. 1) that includes a plurality of browser components 112 (Fig. 1). As shown, interface 400 includes four embedded browser pages or windows 410-440. The upper window 410 is a main page for selecting an automation device and displaying general information pertaining to the device. The browser data can be retrieved from a web site associated with an Ethernet device, for instance. The two middle windows 420 and 430 provide control data values. Window 420 provides a bar graph associated with flavor tanks. Window 420 in essence is a browser component running a script that displays device values on a bar graph. Similarly, window 430 comprises a browser component utilizing a script to display device coolant temperature graphically as an LCD display. The bottom window 430 is a browser interface for a virtual network computing (VNC) remote client that is prompting the user for password to get such some data. It should also be appreciated that an OS pop-up box (not illustrated) can be presented requesting a user name and password for accessing device data from a remote website or source, for example as indicated in the top window 410. Once such user name and password is entered and another password is entered in window 430, the interface 400 is updated to interface 401 of Fig. 4b. Here, window 410 now provides specific device data that can be read and/or written. Additionally, the bottom window 430 now provides device executing ladder logic for the particular automation device, for example retrieved utilizing an applet. The applet in the bottom window 430 can be served from the automation device or from other computing devices accessible to the OS application component 114.

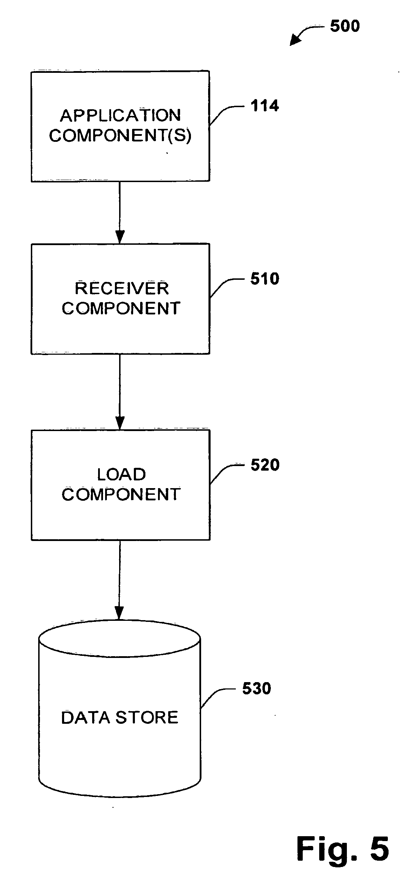

Fig. 5 illustrates an application storage system 500 in accordance with an aspect of the subject invention. Receiver component 510 is operable to receive/retrieve an application component(s) 114. Load component 520 is communicatively coupled to receiver component 510 and data store 530. Load component 520 can receive/retrieve application component(s) 114 from the receiver component 410. Subsequently, load component 520 can load or store application component(s) 114 to data store 530. Data store 530 can include a local computer readable medium or article of manufacture including but not limited to disk storage. By way of example, an application component(s) 114 could be received or read into a buffer from a removable storage medium such as a disc or key drive or even downloaded over the Internet or other network by the receiver component 510. The load component 520 could then read the application component(s) 114 from the buffer and store it to data store 530. Execution of the application component(s) 114 can then be accomplished by reference to or loading of the application component(s) 114 from the data store 530. Finally, it should be noted that receiver component 510 and load component 520 could be separate components, as illustrated, or alternatively subsumed by a single component comprising aggregate functionality.

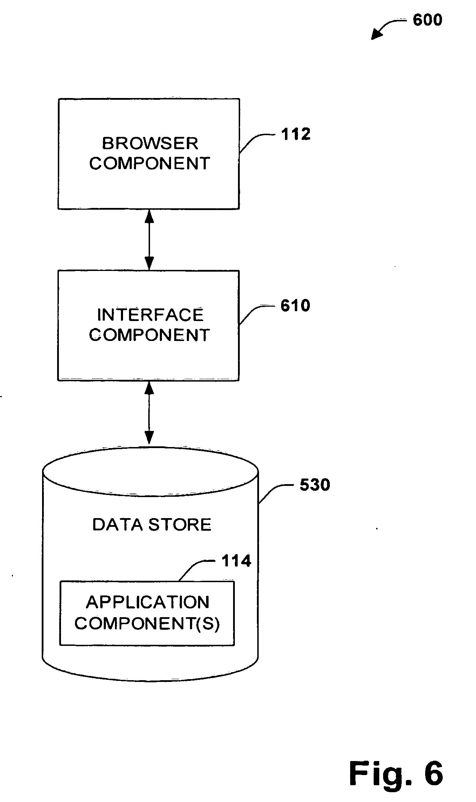

Fig. 6 depicts an application retrieval system 600 in accordance with an aspect of the invention. System 600 includes a browser component 112. Browser component 112 can provide at least part of a human-machine interface (HMI) to interact with data from an industrial control system and/or one or more devices comprising the system. Specific data interactions including device monitoring and control can be specified by application component(s) 114 located in data store 530. Browser component 112 can employ interface component 610, for example an application program interface (API), to request one or more application component(s) 114 for execution by the browser component 112. Interface component 610 can be communicatively coupled to the data store 530. Furthermore, the interface component 610 can request and receive one or more application component(s) 114 from the data store 530 and return them to the browser component 112 for execution thereof. Thus, the application component(s) 114 can be stored and accessed locally on a client computer machine in conjunction with a HMI. It should also be noted that browser component 112 can access other data relating to a display or interface such as HTML or web pages directly from the local store 530. Consequently, entire interfaces can be operational without connection to the Internet or some remote web server. The browser component can also be implemented as an application with display areas, which are web browser controls or java bean containers. The application component 114 may also be a XAML application that interfaces with the automation layer using native industrial protocols such as Ethernet/IP or leveraging standard Internet technologies such as web services and remote procedure call (RPC) invocation.

The proximity and availability of application components 114 on a local data store can result in expeditious access and processing times. By way of example, a browser component 112 can request an application component 114, for instance to monitor an automation device. The interface component 610 can receive the request and retrieve or provide a pointer to the requested application component 114 in database or data store shown as component 530. Further interface component 610 may interface with the data store to read/write general data, besides component 114, using a variety of means such as database queries, reading/writing flat files, etc. It should be appreciated the invention may include, even though the data store component 530 does not show, such components as a database component, files and other data storage besides applications 114. The browser component 112 can then execute the application component 114, present and ultimately display data in an organized and easily comprehensible format employing one or more of text, graphics, sound and video, among other things.

In accordance with an aspect of the subject invention, interface component 610 may include and/or correspond to a web server application. Thus, a client or personal computer can include a web server. The web server application can then be employed to retrieve and execute application component(s) 114 locally *via* a web browser. By way of example, an application component 114 such as an applet can be loaded to the data store utilizing a USB key drive. The browser component 112 can then execute the application component 114 locally and utilize it to send and/or retrieve data to and/or from an industrial automaton system. For instance, browser component 112 can employ Really Simple Syndication (RSS) feeds provided by the industrial control device through at least one of a link on a web page, Universal Resource Identifier (URI), and Universal Resource Locator (URL)

Furthermore, it should be appreciated that data store 530 is not limited to merely application components 114. Data store 530 can also include conventional database components such as files and other data storage, storage units, and formats. The contents of data store 530 may be distributed, managed, replicated, updated and the like by remote database applications, web services, and revision management systems running on remote systems (not shown) such as IBM WebSphere Everyplace Device Manager and OSGi (Open Services Gateway Initiative) device management system. It should also be noted and appreciated that interface component 610 may interface with the data store 530 to read/write general data, besides component 114, utilizing a variety of means and/or mechanisms including but not limited to database queries and reading/writing flat files.

While systems 500 (Fig. 5) and 600 (Fig. 6) describe receiving application components 114, storing them to a local data store 530 and subsequently retrieving the application components 114 from the data store 530, the subject invention is not so limited. For example, if one or more application components 114 are stored on a removable computer readable medium, the applications need not be stored to another local medium such as local disk storage. Rather, the browser component 112 can access the application components 114 directly from the removable storage medium. For example, a key drive or disc including one or more application components 114 can be referenced and accessed by a browser component 112 for execution of one or more application components 114 by the browser component 112.

For purposes of clarity and not limitation, consider the following example highlighting some aspects of the invention. Suppose there exists a browser based utility application for generating specialized web pages, such as the LCD or graph displayed in portions of exemplary interface 4a and 4b. The utility application can include a plurality of scripts, some images and applets, for instance. The application and all its component parts could be loaded from a key drive, a compact disk, or an email attachment, for instance, to a local client computer. Alternatively, such an application could be received or retrieved from another computer or server over a network. The application could subsequently be executed on the local client computer *via* a browser and a specialized web page generated or retrieved such as one that utilizes a script to display coolant temperature utilizing a fancy LCD display or a graph of trend. This web page and any other required files could then be pushed or uploaded to a store such as a web server integrated or associated with an industrial control device including but not limited to an Ethernet device (*e.g*., bridge, switch). This action could be accomplished by executing an applet on the client system that utilizes FTP (File Transfer Protocol) to transfer the files to the store. Alternatively, it should be appreciated that the browser-based application could be located on a remote server. A client computer could then interact with the application on the remote server *via* a browser and command the remote server to transfer a created file to the web server. Once the page is saved to a web server associated with an automation device, one could retrieve the page from the device such as an Ethernet bridge and view the graphics updated with real world values.

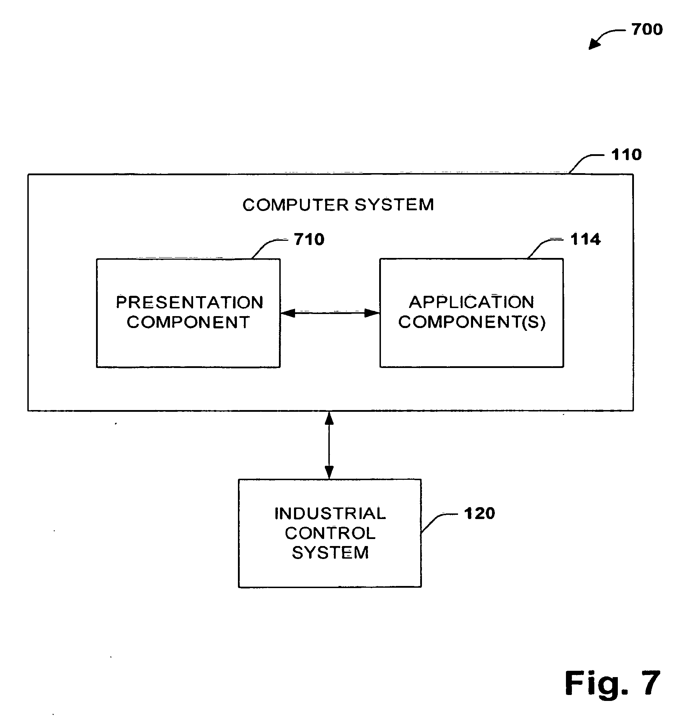

Turning to Fig. 7, an industrial automation interface system 700 is illustrated in accordance with an aspect of the subject invention. As mentioned *supra,* an interface to an industrial automation system does not need to include a browser component. System 700 includes a computer system 110 comprising a presentation component 710 and an application component 114, and an industrial control system 120. Computer system 110 can include a computer or computing device as defined in later sections. According to an aspect of the invention, computer system 110 can include a client computer or PC that can be communicatively coupled to an industrial control or automation system 120.

Computer system 110 includes a presentation component 710 and one or more application components 114. Presentation component supports display and receipt of data. According to an aspect of the invention, presentation component 710 can form part of or be an addition to a computer operating system. Presentation component 710 receives and executes application components 114. Application components can include programs that provide a particular functionality or set of functionalities. According to an aspect of the subject invention, application components can include XAML applications. The presentation component 710 can receive declarative XAML application code and generate 3D graphics and animation among other things. According to another aspect of the invention, application components 114 can include scripts or widgets (*e.g*., Konfabulator, DesktopX, or Dashboard widgets) written in a scripting language (*e.g*., VBScript, Jscript, JavaScript...). The presentation component 710 can then include a script execution engine for executing the scripts or widgets. For example, a widget can be provided that retrieves data from the industrial control system pertaining to the operating temperature of a machine and displays such information graphically as a thermometer on a computer system desktop.

In accordance with an aspect of the subject invention, application component (s) 114 can apply and include mechanisms to support digital rights management. Digital rights management describes a wide range of techniques and/or technologies that support access control. Accordingly, the invention is not to be limited to include only those systems and methods provided hereinafter for purposes of clarity and understanding.

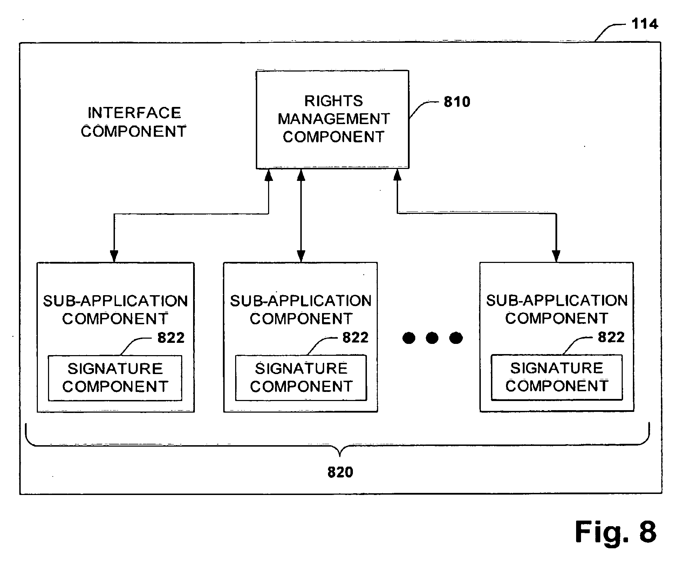

Turning to Fig. 8, an application component 114 is illustrated in accordance with the invention. Application component 114 includes a rights management component 810 as well as a plurality of sub-application components 820. Each sub-application component 820 provides particular functionality germane to the functionality provided by its parent application component 114. Rights management component 810 is a mechanism for controlling sub-application components 820. Rights management component 810 ensures that sub-application components 820 only operate on a particular computer or are only able to access a specific set of automation devices (*e.g*., controllers...). This can be utilized to increase the security of an industrial control system considerably. One way to produce this type of control is through encryption. Therefore, each sub-application component 820 is encrypted with its own unique key. The rights management component 810 can then manage and/or act as a repository for sub-application keys. For instance, as some or all the sub-application components 820 are restricted to operating on specific machine, the rights management component 810 checks the computer identity and only decryts specific sub-application components 820 for execution by a browser if the computer is in fact the specified computer or machine. If the computer is not the specified computer, the rights management component 810 will not decrypt the sub-application components 820. As a result, the sub-application components 820 will not be able to be executed. Additionally or alternatively, the rights management component 810 can restrict access of all or some sub-application components 820 to particular automation devices. In this example, the rights management component 810 can determine the automation device that a sub-application component 820 is to operate on or in conjunction therewith. If the sub-application component 820 is allowable, meaning that its constraints permit operation with particular automation devices, then the rights management component 810 can decrypt or provide the key to decrypt the sub-application component for execution.

It should also be noted and appreciated that the security rights management component 810 may leverage a built in Java sandbox, or how the client application and user are logged into an operating system (OS), which makes them subject to user and/or group policies.

Furthermore, it should be appreciated that other restrictions or license terms can be enforced by the rights management component 810. For example, each subcomponent can have restrictions as to the number of times it can be executed, the period of time that it can be executed, which operator(s) or system credentials can use the application, restrictions on collaboration with other sub-applications, and whether it can be copied, among other things. To enable enforcement of a plurality of constraints, each sub-application component 820 can include a unique signature component 822. Signature component 822 can include metadata specifying or describing constraints associated with a particular sub-application component 820. It may also invoke local security mechanism forcing the user to authenticate with a user name and password, biometrics, and/or with a domain controllers etc. Accordingly, prior to decrypting or providing the key for decryption, the rights management component 810 can verify that all conditions precedent is satisfied. If the one or more conditions are not satisfied, then the rights management component can prevent decryption and thus execution of particular sub-components.

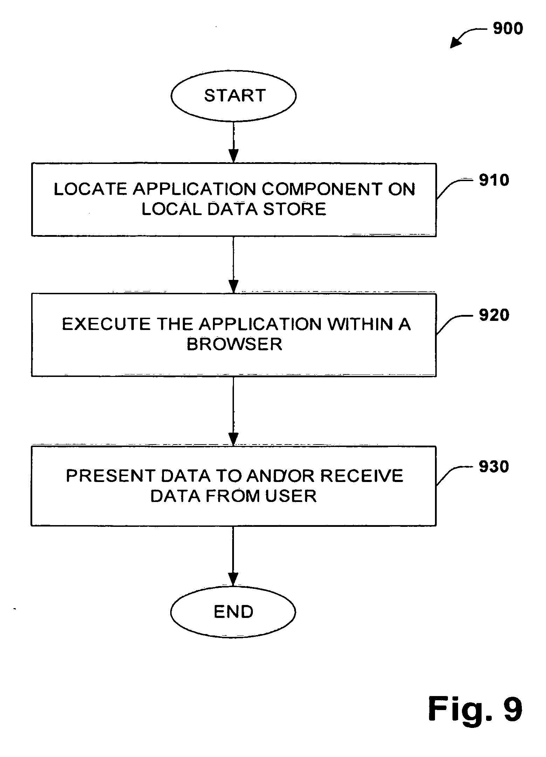

In view of the exemplary systems described *supra,* a methodology that may be implemented in accordance with the present invention will be better appreciated with reference to the flow charts of Figs. 9-12. While for purposes of simplicity of explanation, the methodology is shown and described as a series of blocks, it is to be understood and appreciated that the present invention is not limited by the order of the blocks, as some blocks may, in accordance with the present invention, occur in different orders and/or concurrently with other blocks from what is depicted and described herein. Moreover, not all illustrated blocks may be required to implement the methodology in accordance with the present invention.

Additionally, it should be further appreciated that the methodologies disclosed hereinafter and throughout this specification are capable of being stored on an article of manufacture to facilitate transporting and transferring such methodologies to computers. The term article of manufacture, as defined *supra,* is intended to encompass a computer program accessible from any computer-readable device, carrier, or media.

Turning to Fig. 9, an interface methodology 900 is depicted in accordance with an aspect of the subject invention. At 910, an application component is located on a local data store. The application component is an executable for interaction with industrial control systems and the automation devices composing such systems. The application component can communicate with control systems in their native control protocol. This can relieve the burden on the control system to implement anything Internet like as well as provide added performance benefits and increased capabilities such as multicast. However, the application component may communicate with the control system leveraging internet technologies such as web services, which may simplify the application design and/or client software footprint requirements, provided the automation layer supports these services. Furthermore, the applications can be in a local data store to facilitate expeditious access thereto, among other things. At 920, the application component can be executed by a browser, or executed in a browser or java container belonging to an application, or as an application, servlet or application server. The application component can thereby act as an extension of the browser to facilitate interactions with an industrial control system. Accordingly, the application component can correspond to an applet or plug-in stored on a local data store. The local data store can include any computer readable medium, hardwired or removable, associated with a particular computer system. Accordingly, the data store can include but is not limited to disk storage (*e.g*., magnetic, optical) and key drives. The browser is run or executed on the same system as the local data store. The browser application and/or operating system may be streamed to the client as exemplified but not limited to the methods performed by Ardence 3.x Software Streaming Solution described earlier. At 930, the data can be presented to and/or received from a user *via* the browser. For example, a user could view and control configuration of a programmable logic controller in real time.

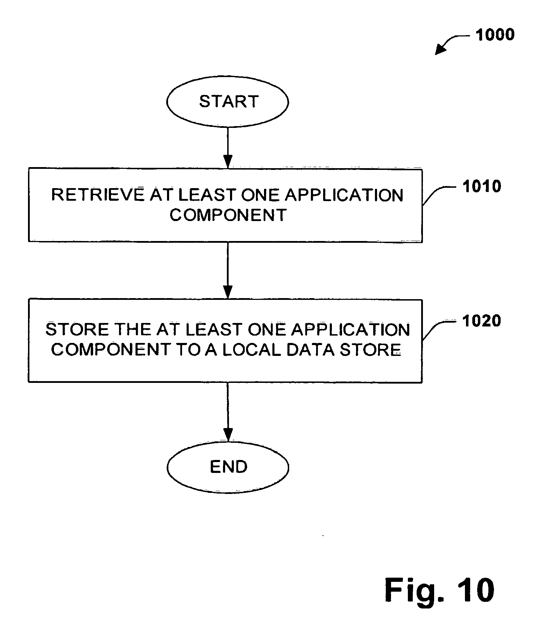

Fig. 10 depicts a storage methodology 1000 in accordance with an aspect of the invention. At 1010, at least one application component is retrieved. The application component can be retrieved from a variety of different sources including but not limited to a removable computer readable medium such as a disk (*e.g*., optical, magnetic...) or a key drive, or alternatively from a network server. At 1020, the at least one application components are stored to a local data store. The local data store is a computer readable medium associated with a particular computer including those that are hardwired and removable. This allows a browser running on a particular computer to retrieve and execute application components expeditiously from a local data store rather than a remote storage location. Further, the local java security and policy environment may be modified and configured through such files as java.policy and/or java.security to support the execution of local and remote applications.

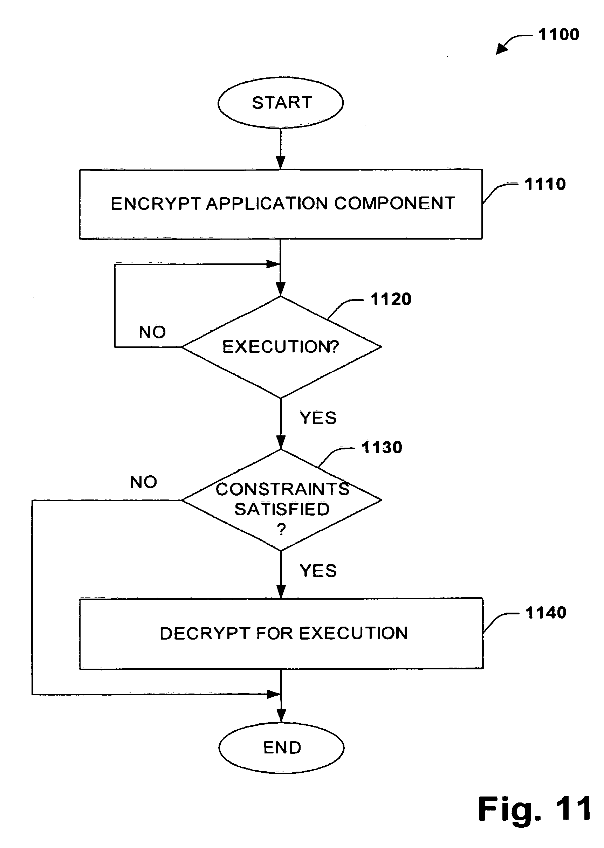

Fig. 11 illustrates a digital rights management methodology 1100 in accordance with an aspect of the subject invention. It should be appreciated that this is only one manner of applying digital rights to application components. Other techniques and methodologies considered within the scope of this invention will become apparent to those of skill in the art upon reading this specification. At 1110, an application component can be encrypted. Encryption of the application component can act to restrict execution thereof. At 1120, a determination is made as to whether the application is to be executed. If the application is not to be executed, the method proceeds to loop and continually check if the application is to be executed. If the application component is to be executed, yes at 1120, the method continues at 1130. At 1130, a determination is made pertaining to whether all constraints of the application component are satisfied. The constraints can concern but are not limited to the particular computer(s) upon which the application can execute, the user(s) that can initiate execution, the number of times the application can execute, the time period within which the application can execute, the automation devices that the application can operate on, among others. These constraints can be embedded with the application component as metadata or stored external to the application. Broadly speaking, the constraints can include vendor license and security constraints as well as user constraints. Depending on the constraints, various methods can be executed to determine the compliance with the constraints. If, at 1130, the constraints are determined to be satisfied, then at 1140 the application can be decrypted and thereby made available for execution. If the constraints are found not to be satisfied, then procedure simply ends. In this scenario, the application component will not be decrypted thus making it unavailable for execution. According to an aspect of the invention, the encryption, decryption, and constraint checks can be performed by another application component associated with one or more subordinate application components.

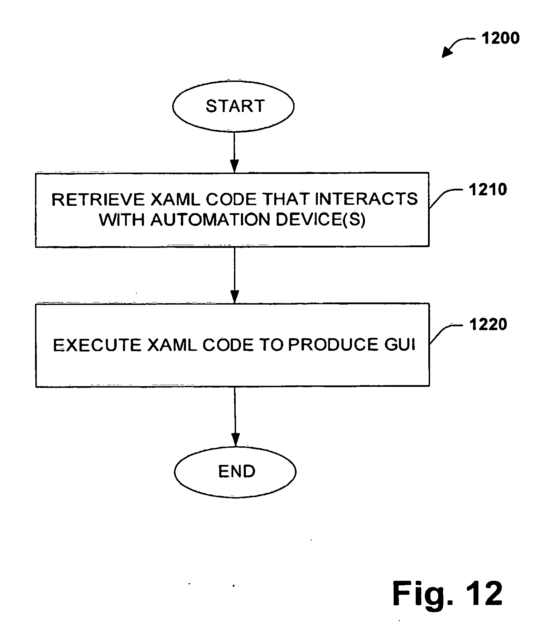

Turning to Fig. 12, a method 1200 of interacting with an industrial automation system is illustrated in accordance with an aspect of the subject invention. At 1210, XAML code is received and/or retrieved. The XAML code can send and/or receive data to and/or from one or more industrial automation devices in an industrial automation system. Furthermore, the XAML code can specify a graphical interface for interacting with data. At 1220, the XAML code is executed, for instance by a local or personal computer. Execution of the XAML code produces the specified graphical user interface.

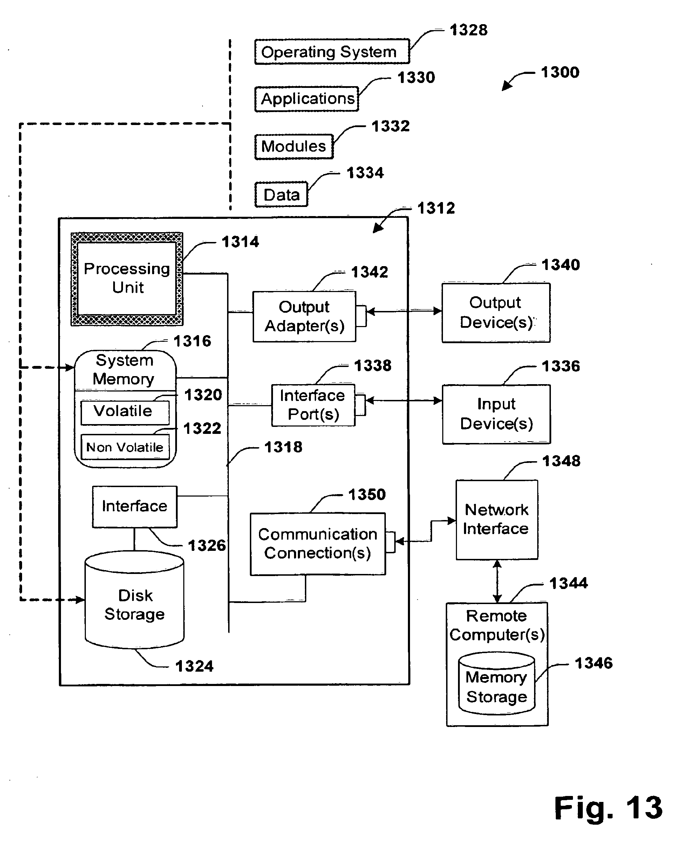

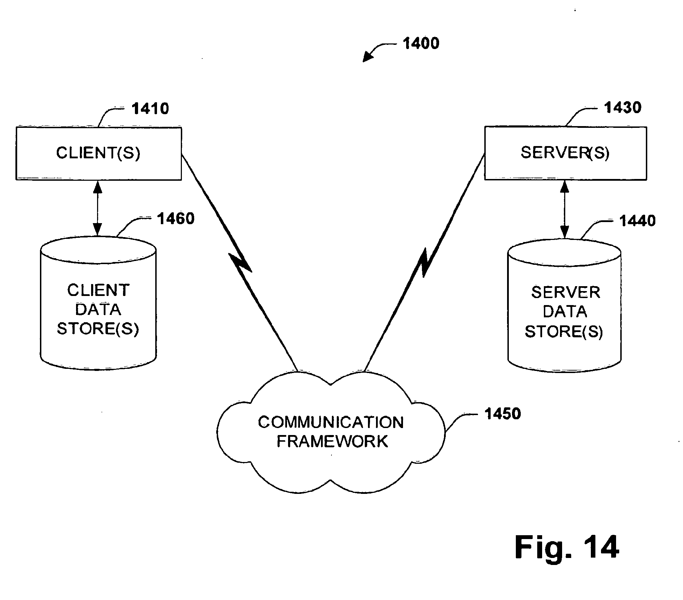

In order to provide a context for the various aspects of the invention, Figs. 13 and 14 as well as the following discussion are intended to provide a brief, general description of a suitable computing environment in which the various aspects of the present invention may be implemented. While the invention has been described above in the general context of computer-executable instructions of a computer program that runs on a computer and/or computers, those skilled in the art will recognize that the invention also may be implemented in combination with other program modules. Generally, program modules include routines, programs, components, data structures, etc. that perform particular tasks and/or implement particular abstract data types. Moreover, those skilled in the art will appreciate that the inventive methods may be practiced with other computer system configurations, including single-processor or multiprocessor computer systems, mini-computing devices, mainframe computers, as well as personal computers, hand-held computing devices, microprocessor-based or programmable consumer electronics, and the like. The illustrated aspects of the invention may also be practiced in distributed computing environments where task are performed by remote processing devices that are linked through a communications network. However, some, if not all aspects of the invention can be practiced on stand-alone computers. In a distributed computing environment, program modules may be located in both local and remote memory storage devices.

With reference to Fig. 13, an exemplary environment 1310 for implementing various aspects of the invention includes a computer 1312. The computer 1312 includes a processing unit 1314, a system memory 1316, and a system bus 1318. The system bus 1318 couples system components including, but not limited to, the system memory 1316 to the processing unit 1314. The processing unit 1314 can be any of various available processors. Dual microprocessors and other multiprocessor architectures also can be employed as the processing unit 1314.

The system bus 1318 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1316 includes volatile memory 1320 and nonvolatile memory 1322. The basic input/output system (BIOS), containing the basic routines to transfer information between elements within the computer 1312, such as during start-up, is stored in nonvolatile memory 1322. By way of illustration, and not limitation, nonvolatile memory 1322 can include read only memory (ROM), programmable ROM (PROM), electrically programmable ROM (EPROM), electrically erasable ROM (EEPROM), or flash memory. Volatile memory 1320 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus

### RAM (DRRAM).

Computer 1312 also includes removable/non-removable, volatile/nonvolatile computer storage media. Fig. 13 illustrates, for example disk storage 1324. Disk storage 1324 includes, but is not limited to, devices like a magnetic disk drive, floppy disk drive, tape drive, Jaz drive, Zip drive, LS-100 drive, flash memory card, or memory stick. In addition, disk storage 1324 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1324 to the system bus 1318, a removable or non-removable interface is typically used such as interface 1326.

It is to be appreciated that Fig 13 describes software that acts as an intermediary between users and the basic computer resources described in suitable operating environment 1310. Such software includes an operating system 1328. Operating system 1328, which can be stored on disk storage 1324, acts to control and allocate resources of the computer system 1312. System applications 1330 take advantage of the management of resources by operating system 1328 through program modules 1332 and program data 1334 stored either in system memory 1316 or on disk storage 1324. It is to be appreciated that the present invention can be implemented with various operating systems or combinations of operating systems.

A user enters commands or information into the computer 1312 through input device(s) 1336. Input devices 1336 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1314 through the system bus 1318 *via* interface port(s) 1338. Interface port(s) 1338 include, for example, a serial port, a parallel port, a game port, and a universal serial bus (USB). Output device(s) 1340 use some of the same type of ports as input device(s) 1336. Thus, for example, a USB port may be used to provide input to computer 1312 and to output information from computer 1312 to an output device 1340. Output adapter 1342 is provided to illustrate that there are some output devices 1340 like displays (*e.g*., flat panel and CRT), speakers, and printers, among other output devices 1340, that require special adapters. The output adapters 1342 include, by way of illustration and not limitation, video and sound cards that provide a means of connection between the output device 1340 and the system bus 1318. It should be noted that other devices and/or systems of devices provide both input and output capabilities such as remote computer(s) 1344.

Computer 1312 can operate in a networked environment using logical connections to one or more remote computers, such as remote computer(s) 1344. The remote computer(s) 1344 can be a personal computer, a server, a router, a network PC, a workstation, a microprocessor based appliance, a peer device or other common network node and the like, and typically includes many or all of the elements described relative to computer 1312. For purposes of brevity, only a memory storage device 1346 is illustrated with remote computer(s) 1344. Remote computer(s) 1344 is logically connected to computer 1312 through a network interface 1348 and then physically connected *via* communication connection 1350. Network interface 1348 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit-switching networks like Integrated Services Digital Networks (ISDN) and variations thereon, packet switching networks, and Digital Subscriber Lines (DSL).

Communication connection(s) 1350 refers to the hardware/software employed to connect the network interface 1348 to the bus 1318. While communication connection 1350 is shown for illustrative clarity inside computer 1312, it can also be external to computer 1312. The hardware/software necessary for connection to the network interface 1348 includes, for exemplary purposes only, internal and external technologies such as, modems including regular telephone grade modems, cable modems, power modems and DSL modems, ISDN adapters, and Ethernet cards.

Fig. 14 is a schematic block diagram of a sample-computing environment 1400 with which the present invention can interact. The system 1400 includes one or more client(s) 1410. The client(s) 1410 can be hardware and/or software (*e.g*., threads, processes, computing devices). The system 1400 also includes one or more server(s) 1430. The server(s) 1430 can also be hardware and/or software (*e.g*., threads, processes, computing devices). The servers 1430 can house threads to perform transformations by employing the present invention, for example. One possible communication between a client 1410 and a server 1430 may be in the form of a data packet adapted to be transmitted between two or more computer processes. The system 1400 includes a communication framework 1450 that can be employed to facilitate communications between the client(s) 1410 and the server(s) 1430. The client(s) 1410 are operatively connected to one or more client data store(s) 1460 that can be employed to store information local to the client(s) 1410. Similarly, the server(s) 1430 are operatively connected to one or more server data store(s) 1440 that can be employed to store information local to the servers 1430.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the scope of the appended claims. Furthermore, to the extent that the terms "includes," "has," and "having" are used in either the detailed description or the claims, such term is intended to be inclusive in a manner similar to the term "comprising" as "comprising" is interpreted when employed as a transitional word in a claim.
In summary the invention discloses a system and method of interacting with industrial automation devices such as programmable logic controllers (PLCs). A client computer can include a browser and one or more application components such as applets that are executed by the browser. The application components retrieve and receive data from automation devices in their native protocol and present such data to a browser for display to a user. The application components, as well as other browser data, can be stored locally on a computer readable medium associated with the client computer to facilitate expeditious access thereto, among other things. Furthermore, the application components can implement and apply digital rights management technology to increase control and security with respect to execution of the application components.

## Claims

1. An industrial control interface system comprising:
a computer system (110) communicatively coupled to an industrial automation control system (120) whereby the computer system comprises:
at least one application component (114) that receives input and generates output based thereon, wherein the at least one application component is stored on said computer system and is adapted to monitor and control the industrial automation control system, the at least one application component including rights management component (810) and a plurality of sub-application components (820), the rights management component controlling access to and execution of the sub-application components based on a license term, each sub-application component providing particular functionality germane to the functionality provided by its parent application component, wherein some or all the sub-application components are restricted to operate on a specified computer or machine and each sub-application component is encrypted with its own unique key; and
a web browser (112) that executes the at least one application component to perform at least one of presentation of data from the control system and receipt of data from a user;
wherein the rights management component is adapted to check the identity of the computer system and decrypt the sub-application components for execution by the web browser if the computer system is the specified computer or machine.

2. The system of claim 1, the at least one application component (114) resides on a local computer data store.

3. The system of claim 2, the local computer data store functions as a web server.

4. The system of claim 1, 2 or 3 the at least one application component (114) resides on a local computer that includes a Java servlet container.

5. The system of one of claims 1 to 4, the at least one application component (114) is stored on a locally accessible computer readable medium.

6. The system of one of claims 1 to 5, the web browser (112) includes or accesses an execution engine to execute the at least one application component (114).

7. A method of interacting with an industrial control system comprising:
encrypting each one of a plurality of sub-application components (820) included in an application component (114) with its own unique key, some or all the sub-application components being restricted to operate on a specified computer or machine, each sub-application component providing particular functionality germane to the functionality provided by its parent application component, said application component being adapted to interact with industrial automation devices and to monitor and control the industrial automation control system, said application component including a rights management component (810);
locating (910) the application component (114) on a local data store;
controlling access to and execution of the sub-application components by the rights management component based on a license term, wherein the identity of the computer system is checked and the sub-application components are decrypted by the rights management component for execution by a web browser (112) if the computer system is the specified computer or machine; and
executing (920) the application component within the web browser (112) on a client computer connected locally to the data store.

8. The method of claim 7, further comprising presenting data to and/or receiving data from a user utilizing the web browser.

9. The method of claim 7 or 8, further comprising retrieving the application component and storing the application component to the data store.

10. The method of claim 9, retrieving the application component comprises retrieving the application component from at least one of a USB drive, an optical disk, and an email attachment.

11. The method of one of claims 7 to 10, further comprising preventing execution of the application component if particular constraints are not satisfied.

12. The method of claim 7, further comprising decrypting the application component after verifying that the constraints are satisfied.

## Patentansprüche

1. Schnittstellensystem für die industrielle Prozeßsteuerung, umfassend:
ein Computersystem (110), das kommunizierend mit einem Steuersystem (120) der industriellen Automatisierung gekoppelt ist, wobei das Computersystem folgendes umfaßt:
mindestens eine Anwendungskomponente (114), die Eingaben empfängt und auf deren Basis Ausgaben erzeugt, wobei die mindestens eine Anwendungskomponente auf dem Computersystem gespeichert wird und dafür ausgelegt ist, das Steuersystem der industriellen Automatisierung zu überwachen und zu steuern, wobei die mindestens eine Anwendungskomponente eine Rechteverwaltungskomponente (810) und mehrere Teilanwendungskomponenten (820) enthält, wobei die Rechteverwaltungskomponente den Zugang zu den und die Ausführung der Teilanwendungskomponenten auf der Basis einer Lizenzbedingung steuert, wobei jede Teilanwendungskomponente bestimmte Funktionalität bereitstellt, die für die durch ihre übergeordnete Anwendungskomponente bereitgestellte Funktionalität von Bedeutung ist, wobei bestimmte oder alle der Teilanwendungskomponenten darauf beschränkt sind, auf einem spezifizierten Computer oder einer spezifizierten Maschine zu arbeiten, und jede Teilanwendungskomponente mit ihrem eigenen einzigartigen Schlüssel verschlüsselt ist; und
einen Web-Browser (112), der die mindestens eine Anwendungskomponente ausführt, um Präsentation von Daten aus dem Steuersystem und/oder Empfang von Daten von einem Benutzer durchzuführen;
wobei die Rechteverwaltungskomponente dafür ausgelegt ist, die Identität des Computersystems zu prüfen und die Teilanwendungskomponenten zur Ausführung durch den Web-Browser zu entschlüsseln, wenn das Computersystem der spezifizierte Computer oder die spezifizierte Maschine ist.

2. System nach Anspruch 1, wobei die mindestens eine Anwendungskomponente (114) auf einem lokalen Computerdatenspeicher residiert.

3. System nach Anspruch 2, wobei der lokale Computerdatenspeicher als ein Web-Server arbeitet.

4. System nach Anspruch 1, 2 oder 3, wobei die mindestens eine Anwendungskomponente (114) auf einem lokalen Computer residiert, der einen Java-Servlet-Container enthält.

5. System nach einem der Ansprüche 1 bis 4, wobei die mindestens eine Anwendungskomponente (114) auf einem lokal zugänglichen computerlesbaren Medium gespeichert ist.

6. System nach einem der Ansprüche 1 bis 5, wobei der Web-Browser (112) eine Ausführungs-Engine zum Ausführen der mindestens einen Anwendungskomponente (114) enthält oder auf sie zugreift.

7. Verfahren zum Interagieren mit einem industriellen Prozeßsteuersystem, mit den folgenden Schritten: Verschlüsseln jeder von mehreren Teilanwendungskomponenten (820), die in einer Anwendungskomponente (114) enthalten sind, mit ihrem eigenen einzigartigen Schlüssel, wobei bestimmte oder alle der Teilanwendungskomponenten darauf beschränkt sind, auf einem spezifizierten Computer oder einer spezifizierten Maschine zu arbeiten, wobei jede Teilanwendungskomponente bestimmte Funktionalität bereitstellt, die für die durch ihre übergeordnete Anwendungskomponente bereitgestellte Funktionalität von Bedeutung ist, wobei die Anwendungskomponente dafür ausgelegt ist, mit Einrichtungen der industriellen Automatisierung zu interagieren und das Steuersystem der industriellen Automatisierung zu überwachen und zu steuern, wobei die Anwendungskomponente eine Rechteverwaltungskomponente (810) enthält;
Lokalisieren (910) der Anwendungskomponente (114) auf einem lokalen Datenspeicher;
Steuern des Zugangs zu den und die Ausführung der Teilanwendungskomponenten durch die Rechteverwaltungskomponente auf der Basis einer Lizenzbedingung, wobei die Identität des Computersystems geprüft wird und die Teilanwendungskomponenten durch die Rechteverwaltungskomponente zur Ausführung durch einen Web-Browser (112) entschlüsselt werden, wenn das Computersystem der spezifizierte Computer oder die spezifizierte Maschine ist; und
Ausführen (920) der Anwendungskomponente in dem Web-Browser (112) auf einem lokal mit dem Datenspeicher verbundenen Client-Computer.

8. Verfahren nach Anspruch 7, bei dem ferner unter Verwendung des Web-Browsers Daten einem Benutzer präsentiert und/oder von einem Benutzer erhalten werden.

9. Verfahren nach Anspruch 7 oder 8, bei dem ferner die Anwendungskomponente abgerufen und die Anwendungskomponente in dem Datenspeicher gspeichert wird.

10. Verfahren nach Anspruch 9, wobei das Abrufen der Anwendungskomponente umfaßt, die Anwendungskomponente von einem USB-Laufwerk und/oder einem optischen Datenträger und/oder einer Email-Anlage abzurufen.

11. Verfahren nach einem der Ansprüche 7 bis 10, bei dem ferner die Ausführung der Anwendungskomponente verhindert wird, wenn besondere Einschränkungen nicht erfüllt sind.

12. Verfahren nach Anspruch 7, bei dem ferner die Anwendungskomponente entschlüsselt wird, nachdem verifiziert wurde, daß die Einschränkungen erfüllt sind.

## Revendications

1. Système d'interface de commande industrielle comprenant :
un système d'ordinateur (110) couplé pour communiquer avec un système de commande d'automatisation industrielle (120) où le système d'ordinateur comprend :
au moins un composant d'application (114) qui reçoit une entrée et génère en fonction de celle-ci une sortie, dans lequel l'au moins un composant d'application est mémorisé sur ledit système d'ordinateur et est adapté pour contrôler et commander le système de commande d'automatisation industrielle, l'au moins un composant d'application comportant un composant de gestion de droits (810) et une pluralité de sous-composants d'application (820), le composant de gestion des droits commandant l'accès aux sous-composants d'application et l'exécution de ceux-ci en fonction d'une condition de licence, chaque sous-composant d'application fournissant une fonctionnalité particulière se rapportant à la fonctionnalité fournie par son composant d'application principal, dans lequel certains des sous-composants d'application, ou tous, sont restreints pour opérer sur un ordinateur ou une machine spécifié et chaque sous-composant d'application est crypté avec sa propre clé unique ; et
un navigateur Web (112) qui exécute l'au moins un composant d'application pour effectuer au moins l'une d'une présentation de données provenant du système de commande et d'une réception de données provenant d'un utilisateur ;
dans lequel le composant de gestion de droits est adapté pour vérifier l'identité du système d'ordinateur et décrypter les sous-composants d'application en vue de leur exécution par le navigateur Web si le système d'ordinateur est l'ordinateur ou la machine spécifié.

2. Système selon la revendication 1, dans lequel l'au moins un composant d'application (114) réside sur une mémoire locale de données informatiques.

3. Système selon la revendication 2, dans lequel la mémoire locale de données informatiques fonctionne comme un serveur Web.

4. Système selon la revendication 1, 2 ou 3, dans lequel l'au moins un composant d'application (114) réside sur un ordinateur local qui comporte un conteneur de servlet Java.

5. Système selon l'une quelconque des revendications 1 à 4, dans lequel l'au moins un composant d'application (114) est mémorisé sur un support lisible par ordinateur accessible localement.

6. Système selon l'une quelconque des revendications 1 à 5, dans lequel le navigateur Web (112) comporte ou sollicite un moteur d'exécution afin d'exécuter l'au moins un composant d'application (114).

7. Procédé d'interaction avec un système de commande industrielle comprenant :
le cryptage de chacun d'une pluralité de sous-composants d'application (820) inclus dans un composant d'application (114) avec sa propre clé unique, certains des composants d'application, ou tous, étant restreints pour fonctionner sur un ordinateur ou une machine spécifié, chaque sous-composant d'application fournissant une fonctionnalité particulière se rapportant à la fonctionnalité fournie par son composant d'application principal, ledit composant d'application étant adapté pour interagir avec des dispositifs d'automatisation industrielle et pour contrôler et commander le système de commande d'automatisation industrielle, ledit composant d'application comportant un composant de gestion de droits (810) ;
la localisation (910) du composant d'application (114) sur une mémoire de données locale ;
la commande de l'accès aux sous-composants d'application et de leur exécution par le composant de gestion de droits en fonction d'une condition de licence, dans lequel l'identité du système d'ordinateur est vérifiée et les sous-composants d'application sont décryptés par le composant de gestion de droits en vue de leur exécution par un navigateur Web (112) si le système d'ordinateur est l'ordinateur ou la machine spécifié ; et
l'exécution (920) du composant d'application dans le navigateur Web (112) sur un ordinateur client connecté localement à la mémoire de données.

8. Procédé selon la revendication 7, comprenant en outre la présentation de données vers et/ou la réception de données depuis un utilisateur utilisant le navigateur Web.

9. Procédé selon la revendication 7 ou 8, comprenant en outre le recouvrement du composant d'application et la mémorisation du composant d'application dans la mémoire de données.

10. Procédé selon la revendication 9, dans lequel le recouvrement du composant d'application comprend le recouvrement du composant d'application depuis au moins l'un d'une clé USB, d'un disque optique, et d'une pièce jointe de courrier électronique.

11. Procédé selon l'une des revendications 7 à 10, comprenant en outre l'interdiction de l'exécution du composant d'application si des contraintes particulières ne sont pas satisfaites.

12. Procédé selon la revendication 7, comprenant en outre le décryptage du composant d'application après la vérification que les contraintes sont satisfaites.
